# EUROPÄISCHE PATENTSCHRIFT

(11) **EP 0 478 564 B1**
(45) Veröffentlichungstag und Bekanntmachung des Hinweises auf die Patenterteilung: **03.08.1994**
(21) Anmeldenummer: 90906868.6
(22) Anmeldetag: 12.05.1990
(51) Int. Cl.: H02J 9/06, B60R 21/00

(54) **INSASSEN-SICHERHEITSEINRICHTUNG FÜR FAHRZEUGE**
SAFETY DEVICE FOR VEHICLE PASSENGERS
DISPOSITIF DE SECURITE POUR LES PASSAGERS D'UN VEHICULE

(30) Priorität: 24.06.1989 DE 3920713
(43) Veröffentlichungstag der Anmeldung: 08.04.1992
(73) Patentinhaber: ROBERT BOSCH GMBH, 70442 Stuttgart (DE)
(72) Erfinder: MATTES, Bernhard, D-7123 Sachsenheim 1 (DE); SCHUMACHER, Hartmut, D-7000 Stuttgart 40 (DE); TAUFER, Peter, D-7253 Renningen 2 (DE)
(86) Internationale Anmeldenummer: DE9000342
(87) Internationale Veröffentlichungsnummer: WO9100636

(56) Entgegenhaltungen:
- US-A- 4 359 715
- US-A- 4 381 457
- US-A- 4 384 734
- US-A- 4 835 513

## Beschreibung

### Stand der Technik

Die Erfindung betrifft eine zumindest eine elektrische Komponente aufweisende Insassen-Sicherheitseinrichtung, insbesondere ein Rückhaltesystem wie z.B. Airbag und/oder Gurtstraffer, für ein mit Bordnetz versehenes Fahrzeug, nach der Gattung des Hauptanspruchs.

Sicherheitseinrichtungen für Kraftfahrzeuge, wie z.B. das Airbag-System, weisen Komponenten auf, die elektrisch betrieben werden. Für eine sichere Funktion dieser Sicherheitseinrichtungen muß ein Ausfall der elektrischen Komponenten aufgrund von Spannungsschwankungen im Bordnetz des Fahrzeugs vermieden werden.

Es ist bekannt, einem zu starken Abfall der Bordnetzspannung mit einem Spannungswandler zu begegnen, der aus der noch vorhandenen, niedrigen Bordnetzspannung eine entsprechend größere Versorgungsspannung für den Betrieb der Sicherheitseinrichtung bildet. Ferner werden sogenannte Energiereserven eingesetzt, die nach Ausfall der Spannungsversorgung kurzzeitig die Funktionsfähigkeit der Sicherheitseinrichtung aufrechterhalten.

Das Dokument US-A-4 384 734 beschreibt eine Insassen-Sicherheitseinrichtung für ein mit Bordnetz versehenes Fahrzeug. Dieses weist zumindest eine elektrische Komponente und eine Energiereserve-Schaltung zur kurzzeitigen Aufrechterhaltung der Spannungsversorgung für eine Auslösung der Sicherheitseinrichtung auf. Wenn bei dieser bekannten Einrichtung, wie üblich, im Bordnetz eine in dem Dokument allerdings nicht angesprochene Überspannungsschutzvorrichtung vorgesehen wird, die bei Überspannung abschaltet, ergibt sich hier automatisch, daß die Sicherheitseinrichtung beim Überschreiten eines vorgebbaren Maximalwertes der Bordnetzspannung von dieser getrennt und mit der Energiereserve-Schaltung verbunden wird.

Schließlich ist aus dem Dokument US-A-4 381 457 eine Einrichtung zur Vermeidung des Datenverlustes bei einem flüchtigen Speicher im Falle des Versagens des öffentlichen Wechselstromnetzes bekannt. Diese Einrichtung umfaßt eine einen Fensterkomparator aufweisende Kontrolleinrichtung, die die Einrichtung an eine Hilfswechselspannungsquelle anschließt.

Aus dem Dokument US-A-4 835 513 ist ebenfalls eine durch Kondensatoren gestützte Spannungsversorgung mit den Merkmalen des Oberbegriffs des Anspruchs 1 bekannt, die darüber hinaus einen Komparator mit Testanschluß zur Funktionsprüfung aufweist.

Der Gegenstand der Erfindung befaßt sich mit dem Problem, der Insassen-Sicherheitseinrichtung auch in atypischen Betriebszuständen stets die für die Funktion bzw. Auslösung hinreichende elektrische Energie zur Verfügung zu stellen.

### Vorteile der Erfindung

Die erfindungsgemäße Insassen-Sicherheitseinrichtung mit den im Hauptanspruch genannten Merkmalen hat den Vorteil, daß beim Auftreten von Überspannungen der Bordnetzversorgung dennoch eine sichere Funktion der Insassen-Sicherheitseinrichtung, insbesondere von deren Auslösegerät, sichergestellt ist. Im allgemeinen wird bei einer Abtrennung der Batterie des Fahrzeugs (z.B. während der Unfallphase aufgrund von Deformationen) davon ausgegangen, daß ein sofortiger Zusammenbruch der Bordnetzspannung erfolgt, das heißt, also ein Unterspannungszustand eintritt. Dies ist jedoch nicht immer der Fall. Es kann durchaus passieren, daß infolge des geschilderten Lastverlustes der Lichtmaschine, deren Rotor sich bei Aufprallbeginn noch unverändert weiterdreht, eine Übererregung eintritt, die zu einer Überspannung auf dem Bordnetz des Fahrzeugs führt. Ein Verlust der Lichtmaschinenbelastung kann nicht nur durch Abtrennen der Batterie, sondern auch durch Abtrennen des Kühlergebläsemotors oder der Scheinwerfer oder anderer eingeschalteter Verbraucher auftreten. Deshalb ist eine gegenteilige Auswirkung auf das Bordnetz, nämlich die Entstehung von kurzzeitigen Überspannungen möglich, als bisher im allgemeinen angenommen worden ist, da man bis jetzt stets einen sofortigen Spannungsrückgang bis auf Null annahm. An das Bordnetz angeschlossene Verbraucher, wie beispielsweise Spannungsregler, Endstufen-Schaltungen usw., sind derart ausgelegt, daß sie ab einer gewissen Überspannung, z.B. größer 22 Volt, abschalten. Dieses hat bei den eingangs genannten Insassen-Sicherheitseinrichtungen die fatale Auswirkung, daß die gesamte Anordnung funktionslos wäre. Wenn also bei einer durch einen Unfall verursachten kurzzeitigen Bordnetzüberspannung z.B. der Spannungsregler im Rückhaltesystem (Airbag) abschaltet, kann sich keine oder nicht mehr rechtzeitig die gewünschte Schutzwirkung entfalten. Das komplette Sicherheitssystem könnte dadurch seinen Sinn verlieren. Da nunmehr jedoch erfindungsgemäß vorgesehen ist, die Sicherheitseinrichtung beim Überschreiten eines vorgebbaren Maximalwerts der Bordnetzspannung von dieser zu trennen und mit der Energiereserve-Schaltung zu verbinden, ist die Funktion der Insassen-Sicherheitseinrichtung unter den vorausgesetzten Umständen stets solange gewährleistet, wie die Energiereserve-Schaltung die Stromversorgung der elektrischen Komponenten übernehmen kann. Die "Überlebenszeit" der Energiereserve-Schaltung ist aufgrund der heutzutage einsetzbaren Mittel (z.B. Kondensatoren) ohne Probleme im Bereich von mindestens 500 ms anzusiedeln. Ein Unfall ereignet sich zumeist in der Zeitspanne von ca. 100 ms, so daß hier etwa die fünffache Sicherheit besteht.

Die Sicherheitseinrichtung wird auch beim Unterschreiten eines vorgebbaren Minimalwerts der Bordnetzspannung von dieser abgetrennt und mit der Energiereserve-Schaltung verbunden. Mithin wird die vorstehend genannte Vorgehensweise nicht nur bei einer Überhöhung der Bordnetzspannung, sondern auch bei einem Unterschreiten eines Minimalwertes vorgenommen.

Zur Überwachung der Höhe der Bordnetzspannung ist ein Komparator vorgesehen. Der Komparator steuert einen Bordnetzschalter an, der die Abtrennung der Bordnetzspannung von der Sicherheitseinrichtung vornimmt. Überdies betätigt der Komparator einen Energiereserve-Schalter, mit dem die Kopplung der Sicherheitseinrichtung mit der Energiereserve-Schaltung vorgenommen wird.

Damit beim Absinken der Bordnetzspannung dennoch eine hinreichend große Versorgungsspannung für die Insassen-Sicherheitseinrichtung zur Verfügung steht, weist die Energiereserve-Schaltung einen Spannungswandler zur Aufrechterhaltung eines Mindestpotentials auf.

Nach einer Weiterbildung der Erfindung ist der Komparator als Fensterkomparator ausgebildet, das heißt, er kontrolliert einen bestimmten Spannungsbereich und somit eine Ober- und Untergrenze der Bordnetzspannung, wobei beim Überschreiten der Ober- bzw. Untergrenze die erfindungsgemäßen Maßnahmen erfolgen.

Schließlich ist es vorteilhaft, wenn der Komparator Testeingänge zur Funktionsprüfung der Energiereserve-Schaltung aufweist. Insofern kann die aktive Abschaltung der Bordnetzversorgung periodisch überprüft werden. Dieses kann beispielsweise durch einen Rechner diagnostizierbar erfolgen. Insofern besteht eine Fehlererkennungsmöglichkeit, so daß eine sichere Auslösefunktion der Insassen-Sicherheitseinrichtung gewährleistet werden kann. Bei bekannten Lösungen werden zur Begrenzung von Überspannungen dem Spannungsregler entsprechende Bauelemente, z.B. ein Varistor mit entsprechendem Vorwiderstand und Zenerdiode vorgeschaltet. Dabei liegt die Begrenzungsspannung der Zenerdiode unterhalb der Abschaltspannung der angeschlossenen elektrischen Komponenten. Diese Begrenzungsbauelemente haben jedoch den Nachteil, daß sie -im Gegensatz zum Erfindungsgegenstand- im späteren Betrieb nicht mehr überprüft werden können. Man kann insofern keine Vorhersage treffen, ob die Funktionstüchtigkeit dieser Bauelemente und damit der Insassen-Sicherheitseinrichtung über die gesamte Lebensdauer des Fahrzeugs gewährleistet ist. Die Diagnosemöglichkeit beim Erfindungsgegenstand schafft hier Abhilfe.

### Zeichnung

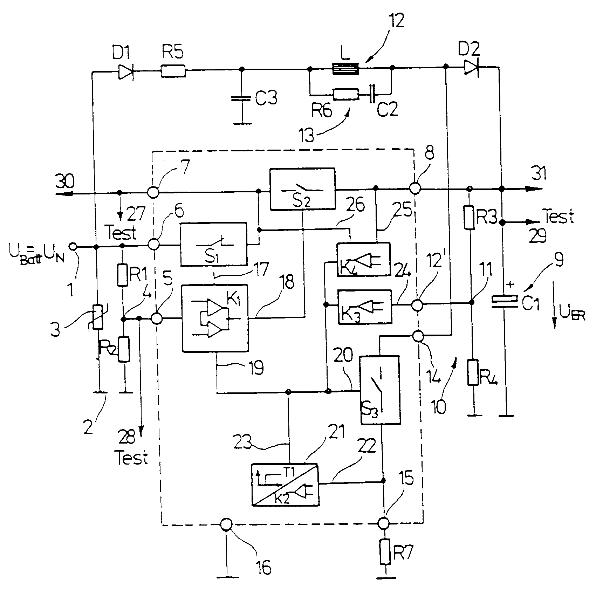

Die Erfindung wird im nachfolgenden anhand der Figur näher erläutert. Diese zeigt ein Blockschaltbild einer elektrischen Komponente einer Insassen-Sicherheitseinrichtung.

Der Pluspol einer Batterie eines Kraftfahrzeugs ist - gemäß der Figur- an eine Klemme 1 gelegt, während der Minuspol der Batterie mit Masse 2 verbunden ist. Zwischen die Klemme 1 und Masse 2 ist ein Spannungsbegrenzungsbauteil 3 (Varistor) geschaltet. Parallel zum Spannungsbegrenzungsbauteil 3 liegt ein aus den Widerständen R₁ und R₂ gebildeter Spannungsteiler, dessen Abgriff 4 zu einer Klemme 5 führt. Die Klemme 1 steht ferner mit einer Klemme 6 in Verbindung.

Mit seinem einen Pol ist ein Bordnetzschalter S₁ an die Klemme 6 angeschlossen. Der andere Pol führt zu einer Klemme 7. An diese ist ferner der eine Pol eines Energiereserve-Schalters S₂ angeschlossen, dessen anderer Pol zu einer Klemme 8 führt. Zwischen der Klemme 8 und Masse 2 liegt ein Kondensator C₁ einer Energiereserve-Schaltung 9. Parallel zum Kondensator C₁ liegt ein Spannungsteiler 10, der von zwei Widerständen R₃ und R₄ gebildet ist. Ein Abgriff 11 des Spannungsteilers 10 führt zu einer Klemme 12'.

Die Klemme 1 steht über eine in Durchlaßrichtung geschaltete Diode D₁ mit dem einen Anschluß eines Widerstandes R₅ in Verbindung, dessen anderer Anschluß zu einer Parallelschaltung 12 führt. Die Parallelschaltung 12 wird aus einer Induktivität L und einem R/C-Glied 13 gebildet. Das R/C-Glied 13 setzt sich aus der Reihenschaltung eines Widerstandes R₆ mit einem Kondensator C₂ zusammen. Zwischen den Widerstand R₅ und die Induktivität L ist der eine Anschluß eines Kondensators C₃ geschaltet, dessen anderer Anschluß an Masse 2 liegt. Der Parallelschaltung 12 ist eine Diode D₂ in Durchlaßrichtung nachgeschaltet. Die Kathode der Diode D₂ ist an die Klemme 8 angeschlossen und die Anode führt zu einer Klemme 14.

Die Klemme 14 steht ferner mit dem einen Pol eines Spannungswandler-Schalters S₃ in Verbindung, dessen anderer Pol zu einer Klemme 15 führt, die über einen Widerstand R₇ an Masse 2 liegt. Ferner ist eine Klemme 16 vorgesehen, die ebenfalls an Masse 2 liegt. Die Klemme 5 ist an einen Komparator K₁ angeschlossen, der als Fensterkomparator ausgebildet ist. Der Komparator K₁ weist die Ausgänge 17,18 und 19 auf. Der Ausgang 17 führt zum Bordnetzschalter S₁, der Ausgang 18 führt zum Energiereserve-Schalter S₂ und der Ausgang 19 steht mit einem Eingang 20 des Spannungswandler-Schalters S₃ in Verbindung. Über die Ausgänge 17,18 und 19 können die Schalter S₁,S₂ und S₃ gesteuert werden.

Ferner ist eine Schaltungsanordnung 21 vorgesehen, die einen Komparator K₂ und ein Zeitglied T₁ aufweist. Der Eingang 22 der Schaltungsanordnung 21 ist an die Klemme 15 angeschlossen, während der Ausgang 23 der Schaltungsanordnung 21 mit dem Eingang 20 des Spannungswandler-Schalters S₃ in Verbindung steht. Ein Eingang 24 eines weiteren Komparators K₃ ist an die Klemme 12' und die beiden Eingänge 25 und 26 eines letzten Komparators K₄ sind an die Klemmen 8 und 7 angeschlossen, während die Ausgänge der Komparatoren K₃ und K₄ mit dem Eingang 20 des Spannungswandler-Schalters S₃ in Verbindung stehen.

Ferner sind Testanschlüsse 27,28 und 29 ausgebildet, wobei der Testanschluß 27 mit der Klemme 7, der Testanschluß 28 mit der Klemme 5 und der Testanschluß 29 mit der Klemme 6 in Verbindung steht. An die Klemme 7 ist ferner ein Ausgang 30 angeschlossen, der zu einer nichtdargestellten Rückhaltesystem-Auswerteschaltung führt. Ein weiterer Ausgang 31 steht mit der Klemme 8 in Verbindung und führt zu nichtdargestellten Rückhaltesystem-Endstufen der Insassen-Sicherheitseinrichtung des Fahrzeugs. Die Rückhalteeinrichtung der Insassen-Sicherheitseinrichtung ist beispielsweise als Airbag ausgebildet. Die Erfindung ist jedoch nicht auf diese Ausbildung beschränkt, sondern sie kann sich beispielsweise auch auf Gurtstraffer oder anderer Rückhaltesysteme usw. beziehen.

Insgesamt ergibt sich folgende Funktionsweise:
Der Komparator K₁ überwacht die Bordnetzspannung U_{N} des Kraftfahrzeugs. Die Bordnetzspannung U_{N} entspricht der Batteriespannung U_{Batt}. Diese liegt an Klemme 1 an und wird von dem von den Widerstanden R₁ und R₂ gebildeten Spannungsteiler entsprechend dem Widerstandsverhältnis heruntergesetzt, so daß an dem Abgriff 4 eine Teilspannung liegt, die über die Klemme 5 dem Komparator K₁ zugeführt wird. Der Komparator K₁ prüft die Höhe der Bordnetzspannung U_{N} im Hinblick auf ein Überschreiten eines vorgegebenen Maximalwertes Uₘₐₓ oder des Unterschreitens eines vorgegebenen Minimalwertes Uₘᵢₙ. Sofern die BordnetzSpannung U_{N} den Maximalwert Uₘₐₓ überschreitet bzw. den Minimalwert Uₘᵢₙ unterschreitet, werden an den Ausgängen 17,18 und 19 entsprechende Steuersignale abgegeben und dem Bordnetzschalter S₁ bzw. dem Energiereserve-Schalters S₂ bzw. dem Spannungswandler-Schalter S₃ zugeführt. Dieses hat die Wirkung, daß der Bordnetzschalter S₁ und der Spannungswandler-Schalter S₃ abgeschaltet, also geöffnet werden, während gleichzeitig der Energiereserve-Schalter S₂ geschlossen wird. Durch das Öffnen des Bordnetzschalters S₁ wird die Bordnetzspannung U_{N} von der dargestellten Schaltungsanordnung abgetrennt und -durch den Energiereserve-Schalter S₂- eine Verbindung zwischen den Klemmen 7 und 8 hergestellt. Ein von der Klemme 1 über die Diode D₁, den Widerstand R₅, die Induktivität L, den Spannungswandler-Schalter S₃ und den Widerstand R₇ fließender Strom wird durch Öffnen des Spannungswandler-Schalters S₃ über die Diode D₂ umgeleitet, so daß er in den Kondensator C₁ der Energiereserve-Schaltung 9 fließt. Dieses hat zur Folge, daß eine entsprechende Aufladung des Kondensators C₁ bei gleichzeitiger Spannungsanhebung erfolgt. Die im Kondensator C₁ gespeicherte Energie steht nunmehr für die Insassen-Sicherheitseinrichtung, insbesondere für das Auslösesystem zur Verfügung. Der Kondensator C₁ liefert über den Ausgang 31 seine Energie direkt zu den dort angeschlossenen Rückhaltesystem-Endstufen und über den Energiereserven-Schalter S₂ zum Ausgang 30, an dem die Rückhaltesystem-Auswerteschaltung angeschlossen ist. Sofern die Rückhaltesystem-Auswerteschaltung ein Kommando zur Auslösung der Insassen-Sicherheitseinrichtung gibt, schalten die Rückhalte-Endstufen durch und leiten die im Kondensator C₁ gespeicherte Energie z.B. zu einer Zündpille eines Airbags.

Aus dem vorstehenden wurde bereits deutlich, daß der Spannungswandler-Schalter S₃ durch Ein- und Ausschalten mittels seiner Beschaltungselemente zum Aufladen des Kondensators C₁ führt. Vorzugsweise wird derart vorgegangen, daß die an dem Widerstand R₇ abfallende Spannung erfaßt und beim Überschreiten eines bestimmten Wertes über den Eingang 22 der Komparator K₂ derart angesteuert wird, daß der Spannungswandler-Schalter S₃ öffnet. Damit geht die an dem Widerstand R₇ abfallende Spannung auf Null zurück, was zum sofortigen Schließen des Spannungswandler-Schalters S₃ führen würde. Letzteres wird jedoch durch das Zeitglied T₁ verhindert, so daß erst nach einer einstellbaren Zeit der Schaltkontakt des Spannungswandler-Schalters S₃ in seine geschlossene Stellung zurückkehrt. Der geschilderte Vorgang wiederholt sich laufend, so daß quasi eine Taktung erfolgt.

Wenn die an dem Kondensator C₁ der Energiereserve-Schaltung 9 anliegende Energiereservenspannung U_{ER} einen vorgebbaren Wert überschreitet, so wird dieses über den Spannungsteiler 10 von dem Komparator K₃ erfaßt, der an den Eingang 20 des Spannungswandler-Schalters S₃ ein entsprechendes Steuersignal liegt, daß den geschilderten Taktvorgang unterbricht. Damit wird ein weiteres Aufladen des Kondensators C₁ gestoppt.

Bei der Inbetriebnahme der Schaltung ist die an dem Kondensator C₁ liegende Energiereservenspannung U_{ER} gleich Null, während an der Klemme 7 die Batteriespannung des Fahrzeugs liegt. Dieses wird von dem Komparator K₄ über seine Eingänge 25 und 26 erfaßt. Der Komparator K₄ steuert daraufhin den Eingang 20 des Spannungswandler-Schalters S₃ derart an, daß dieser seinen offenen Zustand annimmt. Hierdurch wird der Kondensator C₁ besonders schnell aufgeladen, da kein Teilstrom über den den Widerstand R₇ aufweisenden Zweig abfließt. Insofern wird der Kondensator C₁ auch nicht durch den beschriebenen Taktvorgang aufgeladen, da die direkte Aufladung durch die Batterie schneller möglich ist. Sobald die Energiereservenspannung U_{ER} eine bestimmte Größe erreicht hat, wird der Taktvorgang des Spannungswandler-Schalters S₃ gestartet.

Die erfindungsgemäße Anordnung ermöglicht eine Funktionsdiagnose, indem eine entsprechende Ansteuerung des Testanschlusses 28 erfolgt, so daß eine Auslösung der Schalter S₁ bis S₃ stattfindet. Der Vorgang kann an den Testanschlüssen 28 und 29 auf Fehler überwacht werden, insbesondere kann das unter Belastung erfolgende Absinken der Energiereservenspannung U_{ER} beobachtet und insofern Rückschlüsse auf die Funktionssicherheit der Anlage gewonnen werden.

Da die Bordnetzspannung U_{N} nicht zur Versorung der Rückhaltesystem-Endstufen verwendet wird (denn der Energiereserve-Schalter S₂ öffnet), wird eine Endstufenüberlastung bzw. -zerstörung bei Bordnetzüberspannungen und gleichzeitiger Auslösung der Insassen-Sicherheitseinrichtung verhindert.

## Patentansprüche

1. Zumindest eine elektrische Komponente aufweisende Insassen-Sicherheitseinrichtung, insbesondere ein Rückhaltesystem wie z. B. Airbag und/oder Gurtstraffer, für ein mit Bordnetz versehenes Fahrzeug, mit einer einen Kondensator (1) umfassenden Energiereserve-Schaltung (9) zur kurzzeitigen Aufrechterhaltung der Spannungsversorgung für eine Auslösung der Sicherheitseinrichtung, dadurch gekennzeichnet, daß ein die Höhe der Bordnetzspannung (U_{N}) überwachender Komparator (K₁) vorgesehen ist, der einen Bordnetzschalter (S₁) zum Abtrennen der Bordnetzspannung (U_{N}) von der Sicherheitseinrichtung ansteuert und ferner einen Energiereserve-Schalter (S₂) zur Kopplung der Sicherheitseinrichtung mit der Energiereserve-Schaltung (9) betätigt, so daß die Sicherheitseinrichtung beim Überschreiten eines vorgebbaren Maximalwertes (Uₘₐₓ) und beim Unterschreiten eines vorgebbaren Minimalwertes (Uₘᵢₙ) der Bordnetzspannung (U_{N}) von dieser getrennt und mit der Energiereserve-Schaltung (9) verbunden wird.

2. Sicherheitseinrichtung nach Anspruch 1, dadurch gekennzeichnet, daß die Energiereserve-Schaltung (9) einen Spannungswandler zur Aufrechterhaltung eines Mindestpotentials aufweist.

3. Sicherheitseinrichtung nach einem der Ansprüche 1, 2, dadurch gekennzeichnet, daß der Komparator (K₁) als Fensterkomparator ausgebildet ist.

4. Sicherheitseinrichtung nach einem der Ansprüche 1 bis 3, dadurch gekennzeichnet, daß der Komparator (K₁) einen Testanschluß (28) zur Funktionsprüfung der Energiereserve-Schaltung (9) aufweist.

5. Sicherheitseinrichtung nach einem der Ansprüche 1 bis 4, dadurch gekennzeichnet, daß der Komparator (K₁) gleichzeitig mit der Betätigung des Bordnetzschalters (S₁) und des Energiereserve-Schalters (S₂) einen Spannungswandler-Schalter (S₃) öffnet.

## Claims

1. Safety device for vehicle passengers, in particular a restraining system such as an air bag and/or belt retractor, having at least one electrical component, for a vehicle provided with an electrical system, having an energy-reserve circuit (9), comprising a capacitor (1), for briefly maintaining the voltage supply for triggering the safety device, characterized in that a comparator (K₁) which monitors the level of the voltage (U_{N}) of the vehicle's electrical system is provided, which comparator (K₁) actuates a vehicle electrical system switch (S₁) for disconnecting the voltage (U_{N}) of the vehicle's electrical system from the safety device and, in addition, activates an energy-reserve switch (S₂) for connecting the safety device to the energy-reserve circuit (9) so that, when a predeterminable maximum value (Uₘₐₓ) of the voltage (U_{N}) of the vehicle's electrical system is exceeded and when the voltage (U_{N}) of the vehicle's electrical system drops below a predeterminable minimum value (Uₘᵢₙ), the safety device is disconnected from the said voltage (U_{N}) and connected to the energyreserve circuit (9).

2. Safety device according to Claim 1, characterized in that the energy-reserve circuit (9) has a voltage transformer for maintaining a minimum potential.

3. Safety device according to one of Claims 1 and 2, characterized in that the comparator (K₁) is constructed as a window comparator.

4. Safety device according to one of Claims 1 to 3, characterized in that the comparator (K₁) has a test terminal (28) for functionally testing the energy-reserve circuit (9).

5. Safety device according to one of Claims 1 to 4, characterized in that the comparator (K₁) opens a voltage transformer switch (S₃) simultaneously with the actuation of the vehicle electrical system switch (S₁) and the energy-reserve switch (S₂).

## Revendications

1. Dispositif comportant au moins une partie électrique, notamment un système de rétention tel qu'un airbag et/ou un raidisseur de ceintures pour assurer la sécurité des passagers d'un véhicule disposant d'un réseau électrique de bord, dispositif dans lequel un circuit à réserve d'énergie (9), comprenant un condensateur (1), assure le maintien, pendant un court instant, de la tension d'alimentation nécessaire au déclenchement du dispositif de sécurité, caractérisé en ce que le niveau de la tension (U_{N}) du réseau de bord est surveillé par un comparateur (K₁) commandant un contacteur (S₁), qui coupe l'alimentation du dispositif de sécurité par le réseau de bord (U_{N}), et un contacteur (S₂) qui relie le dispositif de sécurité au circuit à réserve d'énergie (9), de manière que le dispositif de sécurité se sépare du réseau de bord mais relié au circuit à réserve d'énergie (9) lorsque la tension (U_{N}) du réseau de bord franchit une valeur maximal (Uₘₐₓ) ou une valeur minimale (Uₘᵢₙ) donnée.

2. Dispositif de sécurité selon la revendication 1, caractérisé en ce que le circuit de réserve d'énergie (9) comprend un transformateur de tension assurant le maintien d'un minimum de potentiel.

3. Dispositif de sécurité selon une des revendication 1 et 2, caractérisé en ce que le comparateur (K₁) est du type à fenêtre.

4. Dispositif de sécurité selon une des revendication 1 à 3, caractérisé en ce que le comparateur (K₁) est équipé d'un raccordement d'essai (28) permettant le contrôle du fonctionnement du circuit à réserve d'énergie.

5. Dispositif de sécurité selon une des revendications 1 à 4, caractérisé en ce que le comparateur (K₁) provoque, en même temps qu'il actionne le contacteur (S₁) du réseau de bord et le contacteur (S₂) de la réserve d'énergie, l'ouverture d'un contacteur (S₃) d'un transformateur de tension.
